# EUROPEAN PATENT APPLICATION

(11) **EP 2 720 422 A1**
(43) Date of publication of application: **16.04.2014**
(21) Application number: 13185311.1
(22) Date of filing: 20.09.2013
(51) Int. Cl.: H04L 12/801, H04L 12/835, H04L 12/823, H04L 12/861

(54) **Queue monitoring to filter the trend for enhanced buffer management and dynamic queue threshold in 4G IP network/equipment for better traffic performance**

(30) Priority: 12.10.2012 US 201213650830
(71) Applicant: Telefonaktiebolaget L M Ericsson (Publ), 164 83 Stockholm (SE)
(72) Inventor: Anand, Prashant, 560066 Bangalore (IN); Balachandran, Arun, 560048 Bangalore (IN)
(74) Representative: HOFFMANN EITLE

(57) **Abstract**

A method for dynamic queue management using a low latency feedback control loop created based on the dynamics of a network during a very short time scale is implemented in a network element. The network element includes a plurality of queues for buffering data traffic to be processed by the network element. The method includes receiving a data packet, a classification of the data packet, and identification of a destination for the data packet. The data packet is assigned to a queue according to the classification and the destination. A queue bandwidth utilization, a total buffer usage level, and a buffer usage of the assigned queue are determined as a set of parameters. A look-up of a dynamic queue threshold using at least two parameters from the set of parameters is performed, and the dynamic queue threshold is applied for admission control to the assigned queue in the shared buffer.

## Description

### FIELD OF THE INVENTION

The embodiments of the invention relate to a method and system for shared buffer management. Specifically, the embodiments relate to a method and system for dynamic queue threshold management in shared buffers.

### BACKGROUND

In fourth generation (4G) Internet Protocol (IP)based networks with convergence, that is networks that are tansitioning from third generation (3G) equipment to 4G equipment, it is imperative that the network support different data traffic types for different applications where this traffic has diverse service level agreement (SLA) requirements. Some of the traffic types will be burstier and others will want guaranteed bandwidth. 'Burstier' traffic is data traffic that has an uneven flow rate, where large proportions of the data traffic are handled by the network in short time frames.

As different applications are forwarding data traffic through the 4G converged IP network, actual application performance and meeting expected application performance is directly dependent on application data traffic handling by the network. To be more precise, data traffic handling for SLA enforcement happens in the data plane/forwarding plane. To be able to meet certain SLA commitments the data plane /forwarding plane must have adequate resources. One of the most fundamental resources in forwarding plane is the packet buffer, without the packet buffer no amount of intelligent packet processing steps can provide throughput in line with relevant SLAs because large percentages of packets will be dropped.

In 4G IP networks, traffic scenarios will change very rapidly and each network node's data plane must adapt quickly to these changing scenarios. However, current network elements allot fixed queue sizes to data traffic, which consume memory resources in shared buffers regardless of the instant data traffic rate in each queue.

### SUMMARY

In one embodiment, a method for dynamic queue management using a low latency feedback control loop created based on the dynamics of a network during a very short time scale is implemented in a network element. The network element includes a plurality of queues for buffering data traffic to be processed by the network element. The method includes receiving a data packet to be processed by the network element. A classification of the data packet is determined. A destination for the data packet is identified. The data packet is assigned to a queue in a shared buffer according to the classification and the destination of the data packet. A queue bandwidth utilization for the assigned queue is determined as one of a set of parameters. A total buffer usage level for the shared buffer is determined as one of the set of parameters. A buffer usage of the assigned queue is determined as one of the set of parameters. A dynamic queue threshold is looked-up using at least two parameters from the set of parameters, and the dynamic queue threshold is applied for admission control to the assigned queue in the shared buffer.

In another example embodiment, a method for dynamic queue management using a low latency feedback control loop created based on the dynamics of a network during a very short time scale is implemented in a network processor or packet forwarding engine in a network element to manage a dynamic queue length for each queue in a shared buffer of the network element. The shared buffer of the network element includes a plurality of queues for buffering data traffic to be processed by the network element. The method includes receiving a data packet to be processed by the network element through an ingress point. A traffic class of the data packet is determined. an egress point of the network element for the data packet is identified. The data packet is assigned to a queue in the shared buffer, where the queue is bound to the traffic class and the egress point determined for the data packet. A quantized queue bandwidth utilization is determined for the assigned queue as one of a set of parameters. A quantized total buffer usage level is determined for the shared buffer as one of the set of parameters. A quantized buffer usage of the assigned queue is determined as one of the set of parameters.

An index is generated using each of the parameters from the set of parameters. A look-up of a dynamic queue threshold in a dynamic queue lookup table including a preprogrammed set of dynamic queue length values using the index is performed. The dynamic queue threshold is applied for admission control to the assigned queue in the shared buffer. A check is made whether the queue length of the assigned queue is equal to or exceeds the dynamic queue threshold. The data packet is enqueued in the assigned queue where the queue length is not equal to or exceeding the dynamic queue threshold, and he data packet is discarded in the assigned queue where the queue length is equal to or exceeds the dynamic queue threshold.

In one embodiment, a network element implements a dynamic queue management process using a low latency feedback control loop created based on the dynamics of a network during a very short time scale. The process for buffering data traffic is processed by the network element. The network element comprises a shared buffer configured to store therein a plurality of queues for buffering the data traffic to be processed by the network element, a set of ingress points configured to receive the data traffic over at least one network connection, a set of egress points configured to transmit the data traffic over the at least one network connection, and a network processor coupled to the shared buffer. The set of ingress points and the set of egress points are coupled to the network processor which is configured to execute a dynamic queue threshold computation component and an enqueue process component. The enqueue process component is configured to receive a data packet to be processed by the network element, to determine a classification of the data packet, to identify a destination of the network element for the data packet, and to assign the data packet to a queue in a shared buffer according to the classification and the destination of the data packet. The dynamic queue threshold computation component is communicatively coupled to the enqueue process component. The dynamic queue threshold computation component is configured to determine a set of parameters including a queue bandwidth utilization for the assigned queue, a total buffer usage level for the shared buffer, and a buffer usage of the assigned queue, to look up a dynamic queue limit using at least two parameters from the set of parameters, and to apply the dynamic queue bandwidth threshold for admission control to the assigned queue in the shared buffer.

In an example embodiment, a network element implements a dynamic queue management process using a low latency feedback control loop created based on the dynamics of a network during a very short time scale, where the process for buffering data traffic is processed by the network element. The network element includes a shared buffer configured to store therein a plurality of queues for buffering the data traffic to be processed by the network element, a set of ingress points configured to receive the data traffic over at least one network connection, a set of egress points configured to transmit the data traffic over the at least one network connection, and a network processor coupled to the shared buffer. The set of ingress points and the set of egress points are coupled to the network processor, which is configured to execute a dynamic queue threshold computation component and an enqueue process component receiving a data packet to be processed by the network element through an ingress point. The enqueue process component is configured to determine a traffic class of the data packet, to identify an egress point of the network element for the data packet, and to assign the data packet to a queue in the shared buffer, where the queue is bound to the traffic class and the egress point determined for the data packet, to check whether the queue length of the assigned queue is equal to or exceeds a dynamic queue threshold, to enqueue the data packet in the assigned queue where the queue length is not equal to or exceeding the dynamic queue threshold, and to discard the data packet in the assigned queue where the queue length is equal to or exceeds the dynamic queue threshold. The dynamic queue threshold computation component is configured to receive a set of quantized parameters including a quantized queue bandwidth utilization for the assigned queue, a quantized total buffer usage level for the shared buffer, and a quantized buffer usage of the assigned queue, to generate an index using each of the quantized parameters, to look up the dynamic queue threshold in a dynamic queue lookup table including a preprogrammed set of dynamic queue length values using the index, and to apply the dynamic queue threshold for admission control to the assigned queue in the shared buffer.

### BRIEF DESCRIPTION OF THE DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.

**Figure 1** is a diagram of one embodiment of network element implementing dynamic queue management for a share buffer.

**Figure 2A** is a flowchart of one embodiment of a process for dynamic queue management for a shared buffer.

**Figure 2B** is a flowchart of another embodiment of a process for dynamic queue management for a shared buffer.

**Figure 3** is a diagram of one example embodiment of a network in which the dynamic queue management process can be implemented.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure the understanding of this description. In other instances, control structures, gate level circuits and full software instruction sequences have not been shown in detail in order not to obscure the invention. Those of ordinary skill in the art, with the included descriptions, will be able to implement appropriate functionality without undue experimentation.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

To facilitate understanding of the embodiments, dashed lines have been used in the figures to signify the optional nature of certain items (e.g., features not supported by a given embodiment of the invention; features supported by a given embodiment, but used in some situations and not in others).

The techniques shown in the figures can be implemented using code and data stored and executed on one or more electronic devices. Such electronic devices store and communicate (internally and/or with other electronic devices over a network) code and data using non-transitory tangible computer-readable storage medium (e.g., magnetic disks; optical disks; read only memory; flash memory devices; phase-change memory) and transitory computer-readable communication medium (e.g., electrical, optical, acoustical or other forms of propagated signals-such as carrier waves, infrared signals, digital signals, etc.). In addition, such electronic devices typically include a set or one or more processors coupled with one or more other components, such as a storage device, one or more input/output devices (e.g., keyboard, a touchscreen, and/or a display), and a network connection. The coupling of the set of processors and other components is typically through one or more busses or bridges (also termed bus controllers). The storage device and signals carrying the network traffic respectively represent one or more non-transitory tangible computer-readable medium and transitory computer-readable communication medium. Thus, the storage device of a given electronic device typically stores code and/or data for execution on the set of one or more processors of that electronic device. Of course, one or more parts of an embodiment of the invention may be implemented using different combination of software, firmware, and/or hardware.

### Overview

The embodiments of the invention provide a method and system for managing queue thresholds in network elements that utilize shared buffers to hold data packets to be forwarded. At each network element, detection of changing traffic scenarios should be fed back to the shared buffer management process as fast as possible. From the standpoint of control system principles as applied to network packet processing and congestion management, if the latency of a feedback loop is high, it will cause the queue threshold settings to oscillate, which will not give optimal performance in the network element.

The embodiments, described herein below are for an intelligent buffer management process, which takes feedback from bandwidth utilization of a traffic management queue stored in a shared buffer to decide the current buffer threshold for each queue dynamically. The process is designed to achieve carrier class Flow level isolation in 4G IP equipment, avoid head of line blocking in a 4G IP network and 4G IP equipment, increase aggregated throughput of the 4G IP network, and avoid shared buffer fragmentation to increase a statistical multiplexing gain of 4G IP equipment.

The disadvantages of the prior art include that current network elements implementing shared buffers for storing data packets to be forwarded fail to meet the emerging requirements in 4G networks, specifically these network elements fail to address the following challenges to buffer management policy. The time scale of the occurrence of data traffic congestion is very small and the response to these situations has to be very fast. In terms of control system modeling, policy enforcement for buffer management has a feedback loop, which needs to have a very low latency to avoid the system settings oscillation that causes degraded performance of the network element. Due to the increased number of traffic management queues (referred to herein often simply as the "queues" in the shared buffer), statically configuring a threshold for each queue fragments the shared buffer resources and hence brings down the statistical multiplexing gain. Due to multi-tenancy and diverse data traffic SLA requirements, it is imperative that congestion should be properly handled.

Each queue emission rate is influenced by the dynamism of operating environment and cannot be controlled and configured at the time of provisioning. Due to a lack of availability of a packet on different queue, excess bandwidth can be used by a backlogged queue. Similarly, in a network with an aggregation structure, where, for example, multiple routers are being aggregated through a high performance, low delay Ethernet switch, excess bandwidth can be used by a backlogged queue. The Ethernet switch is assumed to be a lossless interconnect and hence operates with flow control (IEEE 802.1qbb or IEEE 802.1x). For example, if 4 routers are connected with 100G ports of an Ethernet switch, but are subscribing to the same egress 100G port on Ethernet switch, each 100G ingress port serving these routers will ideally be reduced to 25G.Similar situation can be assumed in cloud deployment and other analogous scenarios.

In existing methods and systems, dynamic thresholds for queuing point resource (i.e., shared buffers) are determined solely by occupancy of the queue. So the queue threshold is just a function of the queue length and available buffer resources. Queue thresholds are the numerical limits set for the queue length attribute of a queue. Queue length is the number of packets or bytes queued for transmission from a queue at any point of time. There can be high and low Queue thresholds. For example, a queueing system can be configured to drop all packets arriving to a queue if the queue length exceeds the upper threshold and remain in the drop state until the queue length falls below a lower threshold.

The short coming of these systems is that they do not take into account the dynamic nature of network operation and changing traffic patterns. So if a buffer policy was configured for a certain queue, assuming that this queue is going to operate at 40G, however due to a change in a dynamic situation this queue is operating at say 7G, the buffer management policy nonetheless operates as if queue is operating at 40G.Indirectly, in the above scenario, one queue can tie up more than six times the amount of buffer resources than what it actually required to services the load and thereby adversely impacts other traffic on other ports or traffic classes.

Another common rule utilized to configure the buffer limit for a queue is as follows:

BUFFER LIMIT = QUEUE DELAY * QUEUE BANDWIDTH

Please note QUEUE BANDWIDTH can be changing depending upon the deployment, oversubscription in network or BW usages by some other traffic types. And all of these can change at a fast rate. The buffer management system as described below utilizes a dynamic determination of a threshold that takes these scenarios into account and provides better resource utilization and throughput.

The embodiments of the present invention overcome the disadvantages of the prior art by implementing a dynamic queue threshold determination process that does not only depend upon the current queue occupancy and amount of buffer available in the system, rather it utilizes a function of current queue length, available buffer resource and queue egress bandwidth utilization. The advantages of the embodiments described herein below is that they provide very fast and low latency feedback to the buffer management policy and implement a very dynamic bandwidth utilization environment.

The embodiments describe a method and system that monitor the queue / port bandwidth, pass the used bandwidth through a low pass filter to eliminate the transient noise, and create a quantized value for following system parameters: queue bandwidth utilization, total buffer usage level, and current queue utilization. A composite index is generated based on above three parameters to indicate the congestion level. This index is utilized to retrieve the dynamic queue threshold from a table, which was pre-configured by software.

### Architecture

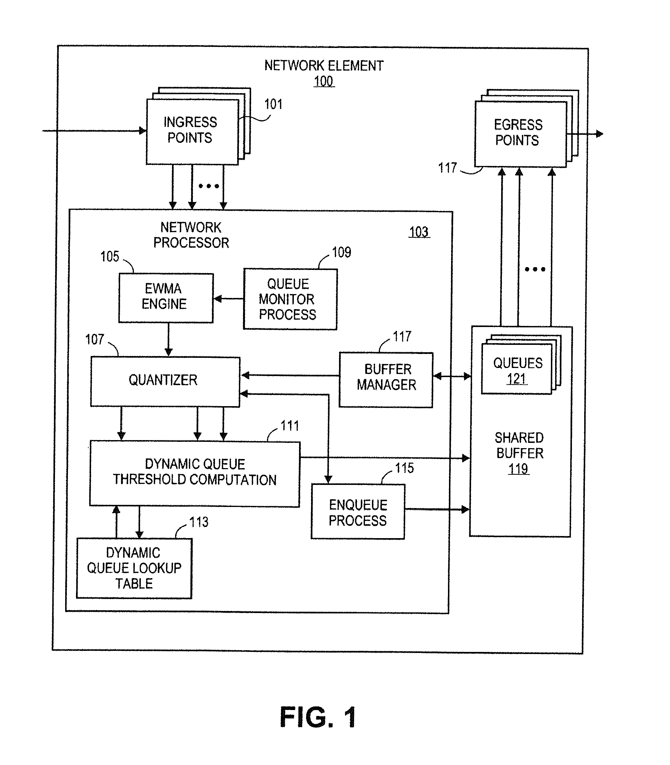

**Figure 1** is a diagram of one embodiment of a process for dynamic queue threshold management for a shared buffer. The process is implemented by a network element 100. The network element 100 includes a set of ingress points 101, a set of egress points 117, a network processor or packet forwarding engine 103 and a shared buffer 119 amongst other components. The network element 100 can be a router, bridge, access point or similar networking device. The network element 100 can be connected via wired or wireless connections to any number of external devices using any combination of communication protocols.

The Ingress points 101 can be any type or combination of networking ports including wireless or wired connection/communication ports and associated hardware and software for processing incoming layer 1 and or layer 2 data and control traffic. The ingress points 101 thereby connect the network deice 100 with any number of other network devices and/or computing devices.

Similarly, the set of egress points 117 can be any type or combination of networking ports including wireless or wired connection/communication ports and associated hardware and software for processing outgoing layer 1 and layer 2 data and control traffic. The egress points 117 thereby connect the network device 100 with any number of other network device 100 with any number of other network devices and/or computing devices

The network processor 103 can be any type of processing device including a general or central processing unit, an application specific integrate circuit (ASIC) or similar processing device. In other embodiments, a set of networking processors are present in the networking element. The network processor 103 can be connected with the other components within the network device by a set of buses routed over a set of mainboards or similar substrates.

The network processor 103 can include a set of hardware or software components (e.g., executed software or firmware). These hardware or software components can process layer 3 and higher layers of incoming and outgoing data and control traffic as well as manage the resources of the network element such as a shared buffer.

In other embodiments, the network element can include a forwarding engine (not shown). The forwarding engine can be a processing device, software, or firmware within a network element that is separate from the network processor 103 or that is utilized in place of a network processor 103. The forwarding engine manages the forwarding of data packets across the network element 100.

The shared buffer 119 is a memory device for storing data such as packets to be processed by the network processor 103 and transmitted by the egress points 117. The shared buffer 119 can have any size or configuration such that it can store a set of queues in which data packets are organized on a per destination and/or traffic class basis. As described further herein below the size of the queue (i.e., the queue threshold) is dynamically managed to optimize the handling of traffic across the network element 100 including improving support for bursty (i.e., intermittent periods of high traffic) traffic patterns, avoiding head of line blocking, supporting carrier class flow level isolation, and traffic type independent performance. The shared buffer can be a volatile or non-volatile memory device that is dedicated to queuing outgoing data traffic. In other embodiments, the shared buffer 119 is a portion of a larger general purpose memory device.

The network processor 103 (or alternately a forwarding engine) includes a set of components for implementing the dynamic queue management including an exponential weighted moving average (EWMA) component 105, a queue monitor process component 109, a quantizer component 107, a dynamic queue threshold computation component 111, an enqueue process component, and a dynamic queue lookup table component 113. The network processor 103 includes other components related to packet processing, network control and similar functions (not shown). For sake of clarity, other components and functions of the network processor 103 are not shown. Similarly, for sake of clarity, the functions of the components set forth below are largely described in relation to managing a single queue in the shared buffer 119. However, one skilled in the art would understand that the network processor 103 could manage any number of queues in the shared buffer 119, where each queue 121 held data packets for a traffic class and/or destination combination.

The queue monitor process component 109 tracks bandwidth utilization of each queue 121 in the shared buffer 119 or at the associated egress point 117. In one embodiment, the queue monitor process component 109, at fixed intervals measure the queue utilization in comparison with a prior state of the queue. The number of bytes transferred since the last bandwidth computation is determined. The frequency of the bandwidth utilization check determines the maximum bandwidth that can be determined without overrunning the counter and its granularity. The interval or schedule of the bandwidth monitoring can be configured to enhance the accuracy of the bandwidth monitoring. The measured bandwidth (referred to herein as "Q_drain") for each queue is passed on to the EWMA component 105 as an input.

The EWMA component 105 is provided by way of example as a filter component, which receives input from the queue monitor process component 109. The queue monitor process component 109 provides a measurement of bandwidth utilized by each queue 121. The measure of bandwidth utilized by a queue (Q_drain) is utilized to determine a time averaged bandwidth for the queue. The time averaged bandwidth (Bandwidth_EWMA) can then be utilized in making the dynamic queue threshold computation. In one embodiment, the time averaged bandwidth is an exponential weighted moving average, however, other embodiments utilizing low pass filter or similar functions can be utilized. In the example embodiment, the function is:

Bandwidth_EWMA = (1-W_bw)*Bandwidth_EWMA + W_bw * Q_drain

Or

Bandwidth_EWMA = Bandwidth_EWMA - (Bandwidth_EWMA>> N) + (Q_drain>> N)

Where W_bw = 2^{-N} and N is a low pass filter constant, Q_drain is the bandwidth used since the last computation of Bandwidth_EWMA.

Where W_bw is a weighting factor for the actual rate. If the value N gets too low (Higher W_bw) Bandwidth_EWMA will overreact to temporary states of congestion. If the value of N gets to high, it will react to congestion very slowly. Value of N can be chosen to influence this relationship.

In one embodiment, the buffer management component 117 monitors overall shared buffer 119 usage. The shared buffer 119 usage can be measured in total number of queues, total queue sizes, total memory usage or similar metrics. This overall shared buffer 119 usage is provided to the quantizer component 107.

The quantizer component 107 receives individual queue bandwidth measurement from the EWMA component 105, total shared buffer usage from the buffer management component 117, current queue length from the enqueue process component 115 and similar resource usage information. The quantizer component 107 receives these metrics and converts ("quantizes") them to discrete values in a set or range of values. The quantizer component 107 can convert the metrics to any discrete range of values using a set of preprogrammed threshold values. For example, the total shared buffer usage and other metrics can be converted to a 16 level range. Thresholds are defined to categorize input total shared buffer usage, queue length or queue bandwidth measurements into values from 0 to 15. These quantized values can then be provided to the dynamic queue threshold computation component 111.

The dynamic queue threshold computation component 111 receives quantized total shared buffer usage (parameter 1), individual queue length (parameter 2) and individual queue bandwidth usage (parameter 3). These quantized values are utilized to determine maximum queue threshold and minimum queue threshold for a given queue or for each queue. The input parameters can be used in any combination or subcombination to select these queue threshold values. In one example, a first mode of operation is defined to determine the queue threshold values using parameter 1 and 3 as lookup values. A second mode of operation is defined to determine the queue threshold values using parameters 1, 2 and 3. A queue maximum threshold value can be a maximum occupancy allowed for that queue at the given queue bandwidth utilization level for a particular queue profile and at the certain level of used up buffer resource. The queue minimum threshold value can be a minimum occupancy allowed for that queue at the given bandwidth utilization level for a particular queue profile and at the certain level of used up buffer resource.

The input parameters can be combined to create an index that represents the traffic congestion of the network element. The index is utilized to lookup a queue maximum threshold value and/or a queue minimum threshold value from a dynamic queue lookup table 113. The dynamic queue lookup table 113 can be populated with indexed values at system startup, by an administrator, by external configuration or through similar mechanisms. In one embodiment, the table values can be determined by an algorithm or through testing and experimentation for optimal configuration values for each traffic congestion condition corresponding to the index generated from the quantized parameters.

In one embodiment, an enqueue process component 115 manages the scheduling of incoming data packets to the respective egress ports by placing the data packet into the appropriate queue 121 in the shared buffer 119. The enqueue process component 115 implements the buffer management policies selected by the dynamic queue threshold computation component 111 from the dynamic queue lookup table 113, by comparing the current queue length to the current dynamic queue thresholds. If the queue length exceeds the maximum queue threshold then the incoming data packet is dropped. If the queue length does not exceed the maximum queue threshold, then the incoming data packet is placed into the queue 121 to be subsequently forwarded through the corresponding egress point.

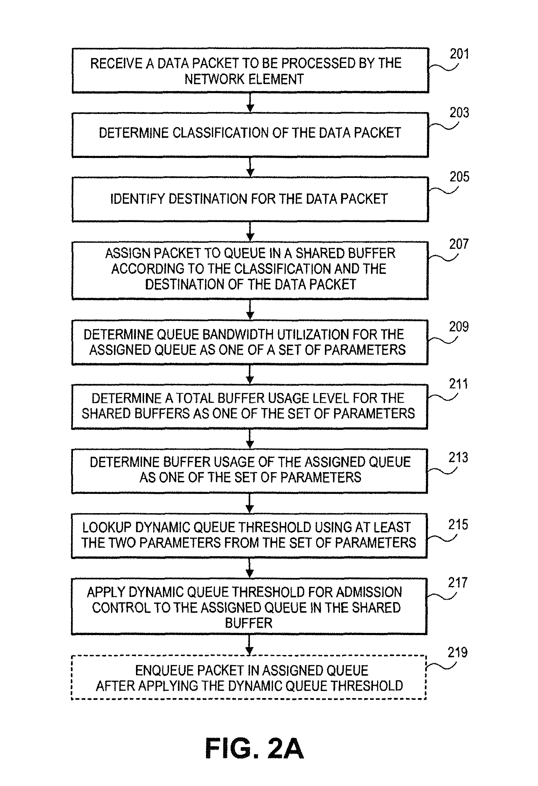

**Figure 2A** is a flowchart of one embodiment of the dynamic queue threshold management process. This process is generally applicable to the management of any queue within the network element where there is a shared resource such as a shared buffer containing the queues. In one embodiment, the process also includes initialization components to configure the dynamic queue lookup table 113 (not shown). Other configuration process elements can include setting initial queue threshold values, quantization range/threshold settings and similar functions that prepare the network element to process and forward incoming data packets in conjunction with the dynamic queue threshold management process.

In one embodiment, the process is started in response to receiving a data packet at an ingress point of the network element (Block 201). The data packet can be analyzed to determine a classification of the data packet (Block 203). The classification can be determined through examination of the header information of the data packet such as IP header information. The header information can indicate an expected or required quality of service (QoS) or similar information that provides guidance on the prioritization and processing of the data packet individually or as a stream of related data packets from a particular source and having a particular destination.

The data packet is also examined to identify the destination of the data packet (Block 205). The destination can be any location within or external to the network element such that data packets can be commonly queued to reach that destination within the network element. For example, the process can be utilized in ingress queueing for oversubscription management or similar scenarios. In one example the destination is an egress point. The destination of the data packet can be determined through examination of the header information, such as the IP header, including the destination address or similar information in the data packet. This information is utilized along with routing tables and algorithms to determine the appropriate destination either internal or external to the network element. The classification and/or destination are then utilized to assign a queue in the shared buffer to store the data packet while the data packet awaits its turn to be forwarded to the destination (Block 207).A separate queue can be created and maintained for each classification and destination combination. In other embodiments, the classifications (e.g., traffic classes) can be grouped according to priority levels or similar criteria, instead of having separate queues for each classification. The data packet is then assigned to this queue (Block 207), by forwarding or writing the data packet to the end of the queue structure in the shared buffer

In one embodiment, a set of metrics are then captured to generate an index representing the general data congestion for the queues and shared buffer of the network element, which is in turn utilized to determine a set of queue threshold values. In another embodiment, this index generation and lookup process operates asynchronously with respect to data packet processing. Also, the metrics can be collected in any order and the order shown in the figure and described herein below is provided by way of example and not limitation. Each metric can be independently collected and quantized. The index generation and lookup does require that each parameter be collected prior to the indexed lookup in the dynamic queue threshold table.

In one embodiment, the queue bandwidth utilization is determined for an assigned queue as one of a set of parameters (Block 209). The raw bandwidth utilization can be calculated by determining the amount of data that passed through a queue since the last calculation. The noise in this sampling can be removed by passing the results through a low pass filter. In a further embodiment, a moving average is calculated from the results of the low pass filter. For example, an exponential weighted moving average (EWMA) can be calculated from the sampled bandwidth utilization or recent bandwidth utilization samples. Any length of time for sampling and any number of samples can be utilized in this calculation. This value can also be quantized into one of a set of possible values based on a range of threshold values tied to each valid quantized value, thereby allowing a discrete range of possible value combination with the other metrics to be generated and facilitating the index generation and creating a discrete dynamic table lookup size.

A total buffer usage value is also determined for the shared buffer as one of the set of parameters (Block 211). This value can be taken as a percentage or absolute size of the shared buffer or similarly calculated. The total buffer usage value represents the relative buffer usage and indicates the overall network element load. The total buffer usage value can also similarly be quantized into a discrete set of values, which can have a similar or separate range from the quantized set of EWMA values.

A queue length or similar measure of the utilization of each queue can be determined by examination of the queues in the shared buffer or similar mechanism and is one of the set of parameters (Block 213). The queue length can be an absolute value, such as the number of data packets in the queue or the number of bytes of data in the queue. The queue length can also be a measure of the proportion of the queue that is in use, such as a percentage of utilized queue space or slots. This queue utilization value can be quantized into a discrete set of values, which can have a similar range or separate range from the quantized set of EWMA values and the quantized total buffer usage level.

The quantized EWMA value, total buffer usage value and queue utilization values form the set of parameters where at least any two of the set of parameters can then be utilized as an index into a dynamic queue lookup table (Block 215). These quantized values represent the current congestion or traffic pattern scenario. The dynamic queue lookup table has been preprogrammed or configured with an appropriate set of queue thresholds for each possible traffic congestion permutation of the quantized metrics. The appropriate dynamic queue threshold value is retrieved and applied for admission control to the corresponding queue in the shared buffer (Block 217). This dynamic queue threshold value can then be used by the enqueuing process to decide whether to drop an incoming packet that is designated for assignment to this queue where the queue length exceeds the dynamic queue threshold value. Where the queue length does not exceed the queue length, then the data packet is enqueued with the assigned queue (Block 209).

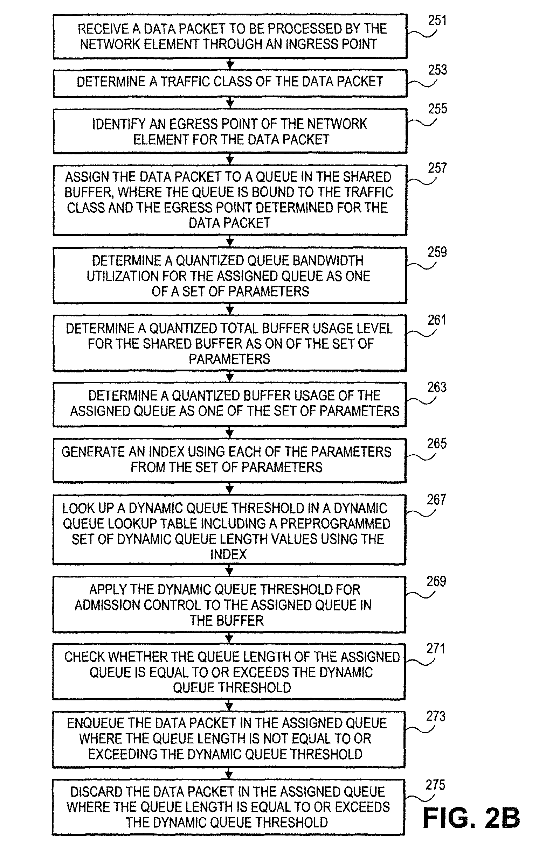

**Figure 2B** is a flowchart of an example embodiment of the dynamic queue threshold management process. This example is specific to the use of a shared buffer to manage traffic for egress points of network element. This embodiment is provided by way of example and not limitation. One skilled in the art would understand that the principles and structures described in relation to the example are also applicable to other implementations. Also, the details set forth above in regard to the general process are also applicable to this specific example and are not restated for purposes of clarity.

The process for dynamic queue management as applied to the scenario of managing a shared buffer for a set of egress points can be initiated in response to receiving a data packet to be processed by the network element through an ingress point (Block 251). The data packet is examined to determine a traffic class of the data packet (Block 253). The header and related information of the data packet can be examined to determine the data packet's traffic class. The data packet is also examined to identify an egress point of the network element for the data packet (Block 255). The egress point can also be determined by examination of the data packet header such as the destination address of the data packet.

The data packet is then assigned to a queue in the shared buffer, where the queue is bound to the traffic class and the egress point determined for the data packet (Block 257). A quantized queue bandwidth utilization is determined for the assigned queue as one of a set of parameters (Block 259). The set of parameters are collected for use in generating an index. A quantized total buffer usage level for the shared buffer is determined as one of the set of parameters (Block 261). A quantized buffer usage of the assigned queue is determined as one of the set of parameters (Block 263). These parameters can be collected in any order and/or in parallel with one another. As set forth above, this can also be an asynchronous process.

An index using each of the parameters from the set of parameters is generated (Block 265). A look-up is performed in a dynamic queue lookup table including a preprogrammed set of dynamic queue length values using the index to obtain a dynamic queue threshold value (Block 267). The dynamic queue threshold is then applied for admission control to the assigned queue in the shared buffer (Block 269). A check can then be made whether the queue length of the assigned queue is equal to or exceeds the dynamic queue threshold (Block 271). The data packet is enqueued in the assigned queue where the queue length is not equal to or exceeding the dynamic queue threshold (Block 273). However, the data packet in the assigned queue is discarded where the queue length is equal to or exceeds the dynamic queue threshold (Block 275).

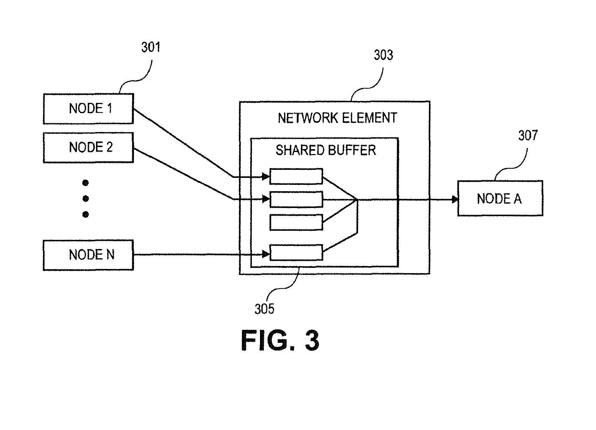

**Figure 3** is a diagram of an example network scenario with a network element implementing the dynamic queue threshold management process. The network element 303 with the shared buffer 305 and queues managed by the dynamic threshold management process handles traffic between a first set of nodes 301 and a destination node 307. This scenario is simplified to illustrate the advantages of the system. The network element could handle data traffic between any number of nodes that communicate with any combination of other nodes rather than a single node as provided in this example.

The dynamic queue threshold management process can increase the aggregate throughput and hence statistical multiplexing gain for the network. This scenario can be tested using different traffic patterns like- Bernoulli, 2 state Markov ON-OFF model for bursty traffic and by creating an imbalanced traffic to a certain port/queue as part of its arrival traffic model.

In one example test of the process and system, the network element 303 handles packet ingress and egress like a 9 port switch with a shared buffer of 48K cells. Each cell is of 208 bytes. Arrival of the packets at the ingress ports can be simulated using a Bernoulli traffic model and 2 state Markov on-off models. Nodes 1- Node N (in this example N=8) are input ports with a 10G input rate and the egress port connected to Node A is an output port with an output rate of 40G. This setup creates a 2:1 oversubscription scenario. The input ports allocate the minimum number of cells required to buffer the packet out of the shared buffer pool. The packets are queued onto the output ports, from where they are scheduled out at a rate of one packet per cycle. There are 4 queues on the output port. A work conserving scheduler schedules packets out of these queues. Queues are configured with equal weight, however, two queues are choked 50% to generate excess bandwidth to be shared by the other two queues.

The drain rate (*DR*) of the output queues are calculated by EWMA method with alpha(α) = 0.5 (*DRnew*= α **BytesDequeued* + (1- α) *DRold*)*.* The drain rate is used to adjust the shared buffer thresholds (Q_Dynamic_Limit) of the queues upon the start of every cycle. In one round of simulation, the test could be run for 10 Million cycles. The Average load, packet size and traffic model are constant in a round. The simulation can be repeated for varying load conditions.

When such simulations are executed over test implementations as described above and the dynamic queue threshold management process is operational, the buffer occupancy on the congested ports queues is reduced. More buffers are made available for the uncongested ports to operate at their full capacity thereby increasing the overall throughput of the network. Since the queue sizes are smaller, the average delay and/or latency is also reduced. The test yields similar results for different packet sizes indicating that the algorithm is packet size agnostic.

Results of the test indicates that a lower packet loss ratio can be achieved with the above described dynamic queue threshold management process and hence higher aggregated throughput, higher port utilization and lower packet delays at times of congestion can also be achieved.

It is to be understood that the above description is intended to be illustrative and not restrictive. Many other embodiments will be apparent to those of skill in the art upon reading and understanding the above description. The scope of the invention should, therefore, be determined with reference to the appended claims, along with the full scope of equivalents to which such claims are entitled.

## Claims

1. A method for dynamic queue management using a low latency feedback control loop created based on the dynamics of a network during a very short time scale implemented in a network element, the network element including a plurality of queues for buffering data traffic to be processed by the network element, the method comprising the steps of:
receiving a data packet to be processed by the network element;
determining a classification of the data packet;
identifying destination for the data packet;
assigning the data packet to a queue in a shared buffer according to the classification and the destination of the data packet;
determining a queue bandwidth utilization for the assigned queue as one of a set of parameters ;
determining a total buffer usage level for the shared buffer as one of the set of parameters;
determining a buffer usage of the assigned queue as one of the set of parameters;
looking up a dynamic queue threshold using at least two parameters from the set of parameters; and
applying the dynamic queue threshold for admission control to the assigned queue in the shared buffer.

2. The method of claim 1, further comprising the steps of:
enqueing the data packet in the assigned queue after applying the dynamic queue threshold.

3. The method of claim 1, further comprising the step of:
determining the queue bandwidth utilization as an exponential weighted moving average to establish a sustain trend of queue behavior.

4. The method of claim 1, further comprising the step of:
generating an index for the lookup of the dynamic queue limit using the at least two parameters from the set of parameters.

5. The method of claim 1, wherein looking up the dynamic queue limit uses all parameters from the set of parameters, further comprising the steps of:
dropping the data packet in response to exceeding the dynamic queue limit.

6. A method for dynamic queue management using a low latency feedback control loop created based on the dynamics of a network during a very short time scale implemented in a network processor or packet forwarding engine in a network element to manage a dynamic queue length for each queue in a shared buffer of the network element, the shared buffer of the network element including a plurality of queues for buffering data traffic to be processed by the network element, the method comprising the steps of:
receiving a data packet to be processed by the network element through an ingress point;
determining a traffic class of the data packet;
identifying an egress point of the network element for the data packet;
assigning the data packet to a queue in the shared buffer, where the queue is bound to the traffic class and the egress point determined for the data packet;
determining a quantized queue bandwidth utilization for the assigned queue as one of a set of parameters;
determining a quantized total buffer usage level for the shared buffer as one of the set of parameters;
determining a quantized buffer usage of the assigned queue as one of the set of parameters;
generating an index using each of the parameters from the set of parameters;
looking up a dynamic queue threshold in a dynamic queue lookup table including a preprogrammed set of dynamic queue length values using the index;
applying the dynamic queue threshold for admission control to the assigned queue in the shared buffer;
checking whether the queue length of the assigned queue is equal to or exceeds the dynamic queue threshold;
enqueing the data packet in the assigned queue where the queue length is not equal to or exceeding the dynamic queue threshold; and
discarding the data packet in the assigned queue where the queue length is equal to or exceeds the dynamic queue threshold.

7. A network element for implementing a dynamic queue management process using a low latency feedback control loop created based on the dynamics of a network during a very short time scale, the process for buffering data traffic to be processed by the network element, the network element comprising:
a shared buffer configured to store therein a plurality of queues for buffering the data traffic to be processed by the network element,
a set of ingress points configured to receive the data traffic over at least one network connection,
a set of egress points configured to transmit the data traffic over the at least one network connection; and
a network processor coupled to the shared buffer, the set of ingress points and the set of egress points, the network processor configured to execute a dynamic queue threshold computation component and an enqueue process component,
the enqueue process component configured to receive a data packet to be processed by the network element, to determine a classification of the data packet, to identify a destination of the network element for the data packet, and to assign the data packet to a queue in a shared buffer according to the classification and the destination of the data packet, and
the dynamic queue threshold computation component communicatively coupled to the enqueue process component, the dynamic queue threshold computation component configured to determine a set of parameters including a queue bandwidth utilization for the assigned queue, a total buffer usage level for the shared buffer, and a buffer usage of the assigned queue, to look up a dynamic queue limit using at least two parameters from the set of parameters, and to apply the dynamic queue bandwidth threshold for admission control to the assigned queue in the shared buffer.

8. The network element of claim 7, wherein the enqueue process component is further configured to enqueue the data packet in the assigned queue after applying the dynamic queue threshold.

9. The network element of claim 7, further comprising:
an exponential weighted moving average (EWMA) engine communicatively coupled to the dynamic queue threshold computation component and configured to determine the queue bandwidth utilization as an exponential weighted moving average.

10. The network element of claim 7, wherein the dynamic queue threshold computation component is further configured to generate an index for the lookup of the dynamic queue limit using the at least two parameters from the set of parameters.

11. The network element of claim 7, wherein the dynamic queue threshold computation component is configured to look up the dynamic queue limit by using all parameters from the set of parameters, and wherein the enqueue process component is further configured to drop the data packet in response to exceeding the dynamic queue limit.

12. A network element for implementing a dynamic queue management process using a low latency feedback control loop created based on the dynamics of a network during a very short time scale, the process for buffering data traffic to be processed by the network element, the network element comprising:
a shared buffer configured to store therein a plurality of queues for buffering the data traffic to be processed by the network element;
a set of ingress points configured to receive the data traffic over at least one network connection,
a set of egress points configured to transmit the data traffic over the at least one network connection; and
a network processor coupled to the shared buffer, the set of ingress points and the set of egress points, the network processor configured to execute a dynamic queue threshold computation component and an enqueue process component receiving a data packet to be processed by the network element through an ingress point,
the enqueue process component configured to determine a traffic class of the data packet, to identifying an egress point of the network element for the data packet, and to assign the data packet to a queue in the shared buffer, where the queue is bound to the traffic class and the egress point determined for the data packet, to check whether the queue length of the assigned queue is equal to or exceeds a dynamic queue threshold, to enqueue the data packet in the assigned queue where the queue length is not equal to or exceeding the dynamic queue threshold, and to discard the data packet in the assigned queue where the queue length is equal to or exceeds the dynamic queue threshold, and
the dynamic queue threshold computation component to receive a set of quantized parameters including a quantized queue bandwidth utilization for the assigned queue, a quantized total buffer usage level for the shared buffer, and a quantized buffer usage of the assigned queue, to generate an index using each of the quantized parameters, to look up the dynamic queue threshold in a dynamic queue lookup table including a preprogrammed set of dynamic queue
length values using the index, and to apply the dynamic queue threshold for admission control to the assigned queue in the shared buffer.
